# EUROPEAN PATENT SPECIFICATION

(11) **EP 2 422 631 B1**
(45) Date of publication and mention of the grant of the patent: **08.05.2013**
(21) Application number: 11176030.2
(22) Date of filing: 29.07.2011
(51) Int. Cl.: A23L 3/36

(54) **Apparatus and method for chilling or freezing a product**
Vorrichtung und Verfahren zum Kühlen oder Einfrieren von Produkten
Appareil et procédé de refroidissement ou congélation d'un produit

(30) Priority: 30.08.2010 US 870935
(43) Date of publication of application: 29.02.2012
(73) Proprietor: Linde Aktiengesellschaft, 80331 München (DE)
(72) Inventor: Wijlens, Jos, 4143 AW Leerdam (NL); McCormick, Stephen A., Warrington, PA Pennsylvania 18976 (US)
(74) Representative: Gellner, Bernd

(56) References cited:
- WO-A1-01/81843
- FR-A1- 2 792 716
- JP-A- 1 262 763
- JP-A- 2003 169 596
- US-A- 6 012 293
- US-A1- 2006 163 039
- US-B1- 6 393 859

## Description

### Technical field

The present invention relates to conveyor belts for transporting products for processing in such as for example a freezer or refrigeration unit.

*More specifically, the present invention relates to an apparatus for chilling or freezing a product, comprising:*
- a *freezer having a freezing chamber therein in which a cryogenic substance is provided, and an inlet and an outlet in communication with the freezing chamber, and*
- *a plastic film belt constructed and arranged to transport the product from the inlet through the freezing chamber for exposure to the cryogenic substance to the outlet for removal of the product for further processing*
*(cf. prior art document* JP 2003 169596 A*).*

### Background of the present invention; prior art

Known freezing systems use a belt fabricated from stainless steel rods, drive links and wire to convey the products for processing, such as freezing or chilling. The construction of known belts and the materials used provide for many "trap points" for bacteria growth, such trap points known as "harborages".

Such belt construction has limited flexibility, cannot be molded to accommodate an exterior surface or entire shape of a product to be processed, and cannot retain cryogen substances to chill, freeze or crust freeze the product. Known belt also cannot hold liquid nitrogen (N₂) to be in contact with the product to be frozen.

Additionally, such known type of belt permits products to stick to the belt, wherein the product is damaged, especially when the product is removed or separated from the surface of the belt upon conclusion of freezing. Moreover, such a known type of belt construction requires additional energy to cool the belt to the required operating temperature for transporting the product.

### Disclosure of the present invention: object, solution, advantages

Starting from the disadvantages and shortcomings as described above and taking the prior art as discussed into account, an object of the present invention is to prevent products to be chilled or frozen, in particular food products, from sticking to a belt when being processed with such belt.

This object is accomplished by an apparatus comprising the features of claim 1 as well as by a method comprising the features of claim 7 and/or 13. Advantageous embodiments and expedient improvements of the present invention are disclosed in the respective dependent claims.

The present invention uses a plastic film, such as a polyethylene film, as a belt to be moved through a refrigeration unit, such as a tunnel freezer, to transport or convey a product such as for example a food product for processing. The present invention substantially reduces if not eliminates the product sticking to the belt.

One of the embodiments of the present invention provides for the plastic film to be thermoformed with a plurality or a myriad of pockets formed in the film in which product to be frozen is received in the pockets.

Thereafter, the pocketed film is moved to the freezer wherein liquid cryogen such as for example liquid nitrogen, liquid carbon dioxide or other liquid cryogen, is dispensed such as by spraying the product disposed in the pockets.

The plastic film may also be moved through an immersion bath in the freezer wherein the pockets are filled with the liquid cryogen for freezing the individual products in their respective pockets.

Alternatively, the plastic film can be used as a continuous loop. When extreme hygienic conditions are warranted, the plastic film can be used for a single pass through the freezer, after which the used plastic film is collected on a spool for either of destruction or recycling. Moreover, the plastic film can be used for a set period of time, such as one factory shift, or for a predetermined amount of product to be processed.

Cleaning of the plastic film belt may not be necessary because the belt only has to be used for a single pass or limited passes through the freezer. The cost to fabricate the film belt is quite low compared to related steel constructions, and maintenance can be, in certain circumstances, completely unnecessary.

As to the method of transporting the product to be chilled or frozen,
- a plastic film belt of flexible material is provided;
- a plurality of pockets in the plastic film belt is formed, each one of the plurality of pockets being sized and shaped to receive one or a plurality of the products therein for chilling or freezing; and
- a cryogenic substance is provided to the plurality of pockets for contacting the cryogenic substance with the plurality of products to be chilled or frozen.

For chilling or freezing the product disposed in any one of the plurality of pockets formed in the plastic film belt,
- the plastic film belt is conveyed through a freezer for exposing the plurality of pockets to the cryogenic substance dispensed in the freezer; and
- the frozen products are released from the plurality of pockets of the plastic film belt.

According to an advantageous embodiment of the present invention, the plastic film belt originates from a spool of plastic film.

According to an expedient embodiment of the present invention, the inlet, the freezing chamber and the outlet are sized and shaped to receive a portion of the plastic film belt.

According to the present invention, the plastic film belt further comprises a plurality of pockets formed therein, in particular with each one of said plurality of pockets being sized and shaped for receiving one or a plurality of the product and the cryogenic substance within the pocket.

According to a preferred embodiment of the present invention, providing the cryogenic substance comprises
- spraying the cryogenic substance onto the product in the plurality of pockets and/or
- immersing the plastic film belt in a bath of the cryogenic substance.

According to an advantageous embodiment of the present invention, the cryogenic substance is selected from liquid nitrogen and liquid carbon dioxide.

According to an expedient embodiment of the present invention, the plastic film belt is melted and recycled for subsequent use.

According to a favoured embodiment of the present invention, the product is a food product.

The present invention finally relates to the use of an apparatus as described above, in particular of a plastic film belt having a plurality of pockets formed therein, for chilling or freezing a product, in particular disposed in any one of the plurality of pockets.

The apparatus and the method for chilling or freezing a product includes a freezer having a freezing chamber therein in which a cryogenic substance is provided, and an inlet and an outlet in communication with the freezing chamber; and a plastic film belt constructed and arranged to transport the product from the inlet through the freezing chamber for exposure to the cryogenic substance to the outlet for removal of the product for further processing. The plastic film belt may be formed with one or a plurality of pockets to transport a corresponding amount of product.

### Brief description of the drawings

For a more complete understanding of the present embodiments and as already discussed above, there are several options to embody as well as to improve the teaching of the present invention in an advantageous manner. To this aim, reference may be made to the claims dependent on claim 1 and on claim 8; further improvements, features and advantages of the present invention are explained below in more detail with reference to preferred embodiments by way of non-limiting example and to the appended drawing figures taken in conjunction with the description of the embodiments, of which:
FIG. 1 discloses a top perspective view of a thermoformed film belt freezer embodiment of the present invention, being operated according to the method of the present invention;
FIG. 2 discloses a top perspective view of another thermoformed film belt freezer embodiment of the present invention, being operated according to the method of the present invention; and
FIG. 3 discloses a top perspective view of still another thermoformed film belt freezer embodiment of the present invention, being operated according to the method of the present invention.

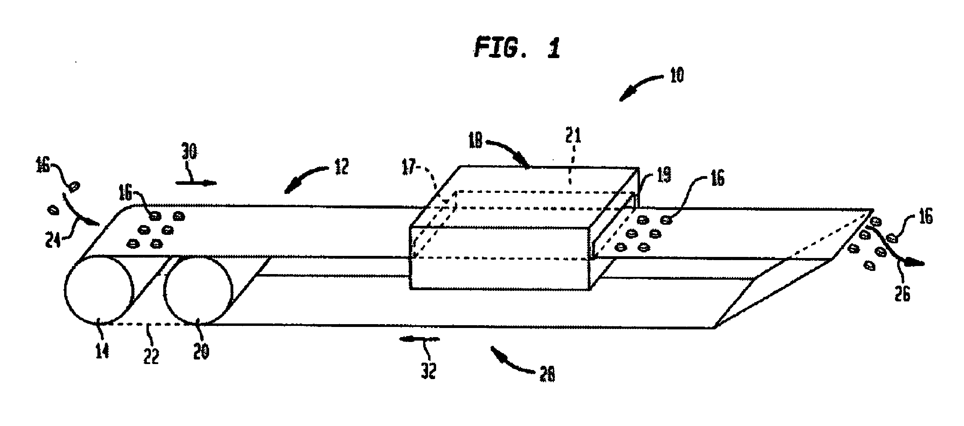

In the drawings, like equipment is labelled with the same reference numerals throughout the description of FIG. 1 to FIG. 3.

### Detailed description of the drawings; best way of embodying the present invention

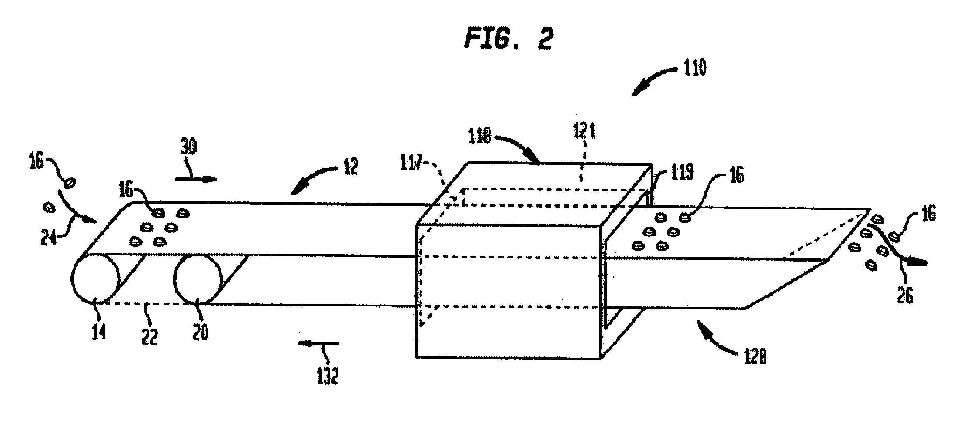

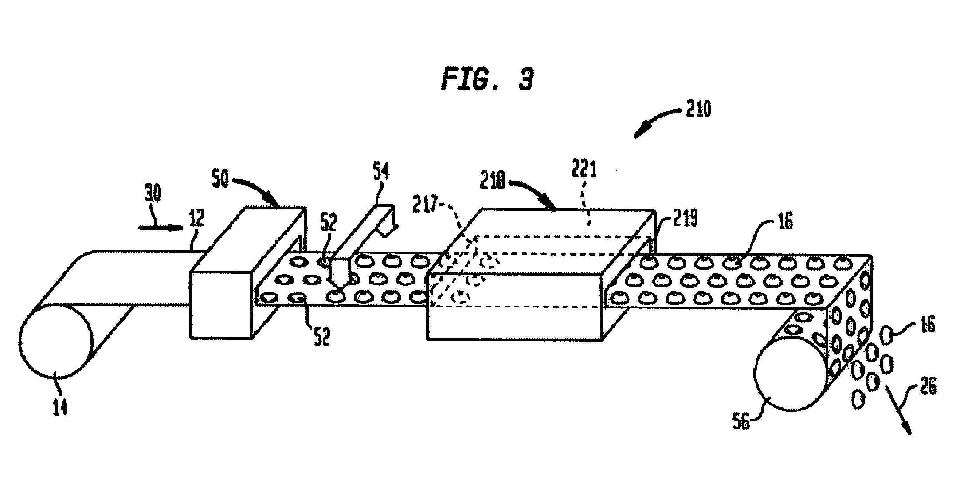

In order to avoid unnecessary repetitions, the following description regarding the embodiments, characteristics and advantages of the present invention relates - unless stated otherwise -
- to the first embodiment 10 (cf. FIG. 1) of a thermoformed film belt freezer apparatus according to the present invention,
- to the second embodiment 110 (cf. FIG. 2) of a thermoformed film belt freezer apparatus according to the present invention as well as
- to the third embodiment 210 (cf. FIG. 3) of a thermoformed film belt freezer apparatus according to the present invention.

The embodiments of FIG. 1, of FIG. 2 and of FIG. 3 use a plastic film, such as a polyethylene film, as a belt to be moved through a refrigeration unit, such as a tunnel freezer, to transport or convey a product such as for example a food product for processing. The present embodiments substantially reduce if not eliminate the product sticking to the belt.

One of the present embodiments provides for the plastic film to be thermoformed with a plurality or a myriad of pockets formed in the film in which product to be frozen is received in the pockets. Thereafter, the pocketed film is moved to the freezer wherein liquid cryogen such as for example liquid nitrogen, liquid carbon dioxide or other liquid cryogen, is dispensed such as by spraying the product disposed in the pockets. The plastic film may also be moved through an immersion bath in the freezer wherein the pockets are filled with the liquid cryogen for freezing the individual products in their respective pockets.

Alternatively, the plastic film can be used as a continuous loop. When extreme hygienic conditions are warranted, the plastic film can be used for a single pass through the freezer, after which the used plastic film is collected on a spool for either of destruction or recycling. Moreover, the plastic film can be used for a set period of time, such as one factory shift, or for a predetermined amount of product to be processed.

Cleaning of the plastic film belt may not be necessary because the belt only has to be used for a single pass or limited passes through the freezer. The cost to fabricate the film belt is quite low compared to related steel constructions, and maintenance can be, in certain circumstances, completely unnecessary.

Referring to FIG. 1 there is shown a thermoformed plastic film belt freezer system embodiment 10. The freezer 10 includes a plastic film belt 12 which originates from a spool 14 or drum of the film belt 12 for transporting or conveying product 16, such as for example food product, through a freezer 18. The film belt 12 is returned to a take-up spool 20 or drum, whereupon the used film can be discarded, destroyed or removed for subsequent melting such as to recycle the film for subsequent use.

Alternatively, the spool 20 can be omitted and the film belt 12 continues to the spool 14 as indicated by the broken line 22 such that the film belt 12 is a continuous loop transporting the product 16 to the freezer 18. The freezer 18 is provided with an inlet 17 and an outlet 19 between while a freezer chamber 21 is disposed. Cryogenic gas or liquid such as nitrogen or carbon dioxide is dispensed in the freezer chamber 21 to the product 16.

The product 16 is provided to the film belt 12 at a charging region for transport as indicated by arrow 24. The product 16 is conveyed through the freezer chamber 21 of the freezer 18, after which the frozen product is removed from the film belt 12 at a discharge region as indicated by arrow 26. A return run of the film belt 12 to the spool 20 or alternatively to the spool 14 is indicated generally at 28. Arrow 30 indicates the direction of movement of the film belt 12, while arrow 32 indicates a return run of the film belt 12.

Referring to FIG. 2 there is shown another thermoformed plastic film belt freezer embodiment 110. The freezer 110 includes a plastic film belt 12 which originates from a spool 14 or drum of the film belt 12 for transporting or conveying product 16, such as for example food product, through a freezer 118. The film belt 12 is returned to a take-up spool 20 or drum, whereupon the used film can be discarded, destroyed or removed for subsequent melting such as to recycle the film for subsequent use.

Alternatively, the spool 20 can be omitted and the film belt 12 continues to the spool 14 as indicated by the broken line 22 such that the film belt 12 is a continuous loop transporting the product 16 to the freezer 118. The freezer 118 is provided with an inlet 117 and an outlet 119 between which a freezer chamber 121 is disposed. Cryogenic gas or liquid such as nitrogen or carbon dioxide is dispensed in the freezer chamber to the product 16.

The product 16 is provided to the film belt 12 at a charging region for transport as indicated by arrow 24. The product 16 is conveyed through the freezer chamber 121 of the freezer 118, after which the frozen product is removed from the film belt 12 at a discharge region as indicated by arrow 26. A return run of the film belt 12 to the spool 20 or alternatively to the spool 14 is indicated generally at 128. Arrow 30 indicates the direction of movement of the film belt 12, while arrow 132 indicates a return run of the film belt 12.

As shown in FIG. 2, the inlet 117, outlet 119 and freezer chamber 121 are constructed and arranged to receive both runs of the film belt 12. That is, upon depositing of the product 16 onto the film belt 12 for freezing, the film belt 12 enters the inlet 117 with the product 16 carried thereon to provide the product to the freezer chamber 121, after which the belt leaves the freezer chamber 121 by the outlet 119.

Thereafter, the product 16 is discharged from the freezer 110 at 26, after which the belt is brought to a return run 128 in the direction of the arrow 132 such that the film belt 12 also moves during the return run through the outlet 119 into the freezer chamber 121 and then through the inlet 117 where it is collected on the spool 20 or alternatively the spool 14.

In this manner of construction and operation, usually where the belt will be captured on the spool 14, the belt can be cooled or frozen on the return run 128 so that the temperature difference between the plastic belt 12 for retrieving the product 16 at the charging region 24 is not as great as it would be with the return run 128 exposed to the ambient atmosphere external to the freezer chamber 121, for example as shown in the embodiment of FIG. 1.

Referring to FIG. 3 there is shown a thermoformed plastic film belt freezer embodiment 210. The freezer 210 includes a plastic film belt 12 which originates from a spool 14 or drum of the belt film 12 for transporting or conveying product 16, such as for example food product, through a freezer 218. In the embodiment of FIG. 3, a thermoforming device 50 is arranged such that the film belt 12 passes therethrough.

The device 50 forms a plurality and in many instances a multiplicity of pockets 52 in the film belt 12. Each one of the pockets is of sufficient dimensions to receive one of the products 16 or a plurality of the products dispensed from a dispenser device 54 disposed above the film belt 12. Each pocket 52 will receive one or a plurality of the products 16 therein for introduction into the freezer chamber 221 via the inlet 217.

As that portion of the film belt 12 is conveyed through the freezer chamber 221, cryogenic liquid or gas is dispensed to contact the product 16 and also is retained or settled in each one of the pockets 52 to provide for increased freezing or crust freezing of the product 16 during its transport. Arrow 30 indicates the direction of movement of the film belt 12.

Thereafter, the film belt 12 departs the freezer chamber 221 through the outlet 219 whereupon the belt is collected on a take-up spool 56 or drum. In this manner of construction, the film belt 12 is used for one pass through the freezer chamber 221.

Additionally, when the spool 14 of film belt 12 has been completely used, the film belt 12 is rolled up completely upon spool 56 for either permanent destruction or recycling into a form similar to the original form of the film belt 12 for reuse with the freezer embodiment 210. The frozen product 16 is released from the pockets 52 at the discharge region shown by the arrow 26 when the film belt 12 is collected upon the spool 56.

Alternatively, once the device 50 has provided the pockets 52 in the film belt 12, the device can be removed and the film belt constructed and arranged as a continuous loop for movement around the spools 14, 56 for use for a select period of time or until such time as the film is considered contaminated or less than optimal for freezing applications.

Regarding the thermoforming device 50, such a device is distributed by Multivac Inc. of Kansas City, Missouri U.S.A.

### List of reference numerals

- 10: thermoformed film belt freezer system, in particular thermoformed plastic film belt freezer (according to first embodiment; cf. FIG. 1)
- 110: thermoformed film belt freezer system, in particular thermoformed plastic film belt freezer (according to second embodiment; cf. FIG. 2)
- 210: thermoformed film belt freezer system, in particular thermoformed plastic film belt freezer (according to third embodiment; cf. FIG. 3)
- 12: film belt, in particular plastic film belt, for example polyethylene film belt
- 14: drum or spool
- 16: product, in particular food product
- 17: inlet of freezer 18 (according to first embodiment; cf. FIG. 1)
- 117: inlet of freezer 118 (according to second embodiment; cf. FIG. 2)
- 217: inlet of freezer 218 (according to third embodiment; cf. FIG. 3)
- 18: freezer (according to first embodiment; cf. FIG. 1)
- 118: freezer (according to second embodiment; cf. FIG. 2)
- 218: freezer (according to third embodiment; cf. FIG. 3)
- 19: outlet of freezer 18 (according to first embodiment; cf. FIG. 1)
- 119: outlet of freezer 118 (according to second embodiment; cf. FIG. 2)
- 219: outlet of freezer 218 (according to third embodiment; cf. FIG. 3)
- 20: drum or spool, in particular take-up drum or take-up spool
- 21: freezer chamber (according to first embodiment; cf. FIG. 1)
- 121: freezer chamber (according to second embodiment; cf. FIG. 2)
- 221: freezer chamber (according to third embodiment; cf. FIG. 3)
- 22: line, in particular broken line
- 24: charging region
- 26: discharge region
- 28: return run (according to first embodiment; cf. FIG. 1)
- 128: return run (according to second embodiment; cf. FIG. 2)
- 30: direction of movement of film belt 12
- 32: arrow indicating return run of film belt 12 (according to first embodiment; cf. FIG. 1)
- 132: arrow indicating return run of film belt 12 (according to second embodiment; cf. FIG. 2)
- 50: thermoforming device
- 52: pocket in film belt 12
- 54: dispenser device
- 56: drum or spool, in particular take-up drum or take-up spool

## Claims

1. An apparatus (10; 110; 210) for chilling or freezing a product (16), comprising:
- a freezer (18; 118; 218) having a freezing chamber (21; 121; 221) therein in which a cryogenic substance is provided, and an inlet (17; 117; 217) and an outlet (19; 119; 219) in communication with the freezing chamber (21; 121; 221); and
- a plastic film belt (12) constructed and arranged to transport the product (16) from the inlet (17; 117; 217) through the freezing chamber (21; 121; 221) for exposure to the cryogenic substance to the outlet (19; 119; 219) for removal of the product (16) for further processing,
***characterized in***
***that*** *the plastic film belt (12) comprises a plurality of pockets (52) formed therein.*

2. The apparatus according to claim 1, wherein the plastic film belt (12) originates from a spool (14) of plastic film.

3. The apparatus according to claim 1 or 2, wherein the inlet (17; 117; 217), the freezing chamber (21; 121; 221) and the outlet (19; 119; 219) are sized and shaped to receive a portion of the plastic film belt (12).

4. The apparatus according to any one of claims 1 to 3, wherein each one of said plurality of pockets (52) is sized and shaped for receiving one or a plurality of the product (16) and the cryogenic substance within the pocket (52).

5. The apparatus according to any one of claims 1 to 4, wherein the cryogenic substance is selected from liquid nitrogen and liquid carbon dioxide.

6. The apparatus according to any one of claims 1 to 5, wherein the product (16) is a food product.

7. A method of transporting a product (16) to be chilled or frozen, comprising:
- providing a plastic film belt (12) of flexible material;
- forming a plurality of pockets (52) in the plastic film belt (12), each one of the plurality of pockets (52) sized and shaped to receive one or a plurality of the products (16) therein for chilling or freezing; and
- providing a cryogenic substance to the plurality of pockets (52) for contacting the cryogenic substance with the plurality of products (16) to be chilled or frozen.

8. The method according to claim 7, wherein providing the cryogenic substance comprises spraying the cryogenic substance onto the product (16) in the plurality of pockets (52).

9. The method according to claim 7 or 8, wherein providing the cryogenic substance comprises immersing the plastic film belt (12) in a bath of the cryogenic substance.

10. The method according to any one of claims 7 to 9, wherein the cryogenic substance is selected from liquid nitrogen and liquid carbon dioxide.

11. The method according to any one of claims 7 to 10, further comprising melting and recycling the plastic film belt (12) for subsequent use.

12. The method according to any one of claims 7 to 11, wherein the product (16) is a food product.

13. A method of chilling or freezing a product (16) disposed in any one of a plurality of pockets (52) formed in a plastic film belt (12), comprising conveying the plastic film belt (12) through a freezer (18; 118; 218) for exposing the plurality of pockets (52) to a cryogenic substance dispensed in the freezer (18; 118; 218), and releasing frozen products (16) from the plurality of pockets (52) of the plastic film belt (12).

14. Use of an apparatus (10; 110; 210) according to any one of claims 1 to 6, in particular of a plastic film belt (12) having a plurality of pockets (52) formed therein, for chilling or freezing a product (16), in particular disposed in any one of the plurality of pockets (52).

## Patentansprüche

1. Vorrichtung (10; 110; 210) zum Kühlen oder Einfrieren eines Produkts (16), die Folgendes umfasst:
eine Gefriereinheit (18; 118; 218) mit einer darin befindlichen Gefrierkammer (21; 121; 221), in der eine tiefkalte Substanz bereitsteht, sowie mit einem Einlass (17; 117; 217) und einem Auslass (19; 119; 219), die in Verbindung mit der Gefrierkammer (21; 121; 221) stehen; und
ein Kunststofffolienband (12), das so ausgebildet und angeordnet ist, dass das Produkt (16) vom Einlass (17; 117; 217) durch die Gefrierkammer (21; 121; 221), wo es der tiefkalten Substanz ausgesetzt ist, zum Auslass (19; 119; 219) transportiert wird, wo das Produkt (16) entfernt wird, um es einer Weiterverarbeitung zuzuführen,
**dadurch gekennzeichnet, dass** das Kunststofffolienband (12) mehrere darin ausgebildete Taschen (52) umfasst.

2. Vorrichtung nach Anspruch 1, bei der das Kunststofffolienband (12) von einer Kunststofffolie enthaltenden Spule (14) stammt.

3. Vorrichtung nach Anspruch 1 oder 2, bei der der Einlass (17; 117; 217), die Gefrierkammer (21; 121; 221) und der Auslass (19; 119; 219) so dimensioniert und geformt sind, dass sie einen Abschnitt des Kunststofffolienbands (12) aufnehmen.

4. Vorrichtung nach einem der Ansprüche 1 bis 3, bei der jede der mehreren Taschen (52) so dimensioniert und geformt ist, dass sie ein Produkt (16) oder mehrere davon sowie die tiefkalte Substanz innerhalb der Tasche (52) aufnimmt.

5. Vorrichtung nach einem der Ansprüche 1 bis 4, bei der die tiefkalte Substanz aus flüssigem Stickstoff und flüssigem Kohlenstoffdioxid ausgewählt ist.

6. Vorrichtung nach einem der Ansprüche 1 bis 5, bei der das Produkt (16) ein Nahrungsmittel ist.

7. Verfahren zum Transportieren eines Produkts (16), das gekühlt oder eingefroren werden soll, wobei das Verfahren Folgendes umfasst:
Bereitstellen eines Kunststofffolienbands (12) aus flexiblem Material;
Formen mehrerer Taschen (52) im Kunststofffolienband (12), wobei jede der mehreren Taschen (52) so dimensioniert und geformt ist, dass sie darin ein Produkt (16) oder mehrere davon zum Kühlen oder Einfrieren aufnimmt; und
Bereitstellen einer tiefkalten Substanz für die mehreren Taschen (52), so dass die tiefkalte Substanz mit den mehreren Produkten (16) in Berührung kommt, die gekühlt oder eingefroren werden sollen.

8. Verfahren nach Anspruch 7, bei dem das Bereitstellen der tiefkalten Substanz das Aufsprühen der tiefkalten Substanz auf das Produkt (16) in den mehreren Taschen (52) umfasst.

9. Verfahren nach Anspruch 7 oder 8, bei dem das Bereitstellen der tiefkalten Substanz das Eintauchen des Kunststofffolienbands (12) in ein Bad der tiefkalten Substanz umfasst.

10. Verfahren nach einem der Ansprüche 7 bis 9, bei dem die tiefkalte Substanz aus flüssigem Stickstoff und flüssigem Kohlenstoffdioxid ausgewählt ist.

11. Verfahren nach einem der Ansprüche 7 bis 10, das weiterhin das Auftauen und Rezyklieren des Kunststofffolienbands (12) für eine nachfolgende Verwendung umfasst.

12. Verfahren nach einem der Ansprüche 7 bis 11, bei dem das Produkt (16) ein Nahrungsmittel ist.

13. Verfahren zum Kühlen oder Einfrieren eines Produkts (16), das sich in einer von mehreren Taschen (52) befindet, die in einem Kunststofffolienband (12) geformt sind, wobei das Verfahren das Befördern des Kunststofffolienbands (12) durch eine Gefriereinheit (18; 118; 218), wo die mehreren Taschen (52) einer in der Gefriereinheit (18; 118; 218) abgegebenen tiefkalten Substanz ausgesetzt sind, sowie das Freigeben der eingefrorenen Produkte (16) aus den mehreren Taschen (52) des Kunststofffolienbands (12) umfasst.

14. Verwendung einer Vorrichtung (10; 110; 210) nach einem der Ansprüche 1 bis 6, insbesondere eines Kunststofffolienbands (12) mit mehreren darin geformten Taschen (52), um ein Produkt (16), das sich insbesondere in einer von mehreren Taschen (52) befindet, zu kühlen oder einzufrieren.

## Revendications

1. Dispositif (10; 110; 210) pour le refroidissement ou la congélation d'un produit (16), comprenant:
- un congélateur (18; 118; 218) comportant une chambre de congélation (21; 121; 221) dans laquelle il se trouve une substance cryogénique, et une entrée (17; 117; 217) et une sortie (19; 119; 219) en communication avec la chambre de congélation (21; 121; 221); et
- une courroie de film plastique (12) conçue et agencée pour transporter le produit (16) depuis l'entrée (17; 117; 217) à travers la chambre de congélation (21; 121; 221) afin de l'exposer à la substance cryogénique jusqu'à la sortie (19; 119; 219) pour enlever le produit (16) en vue d'un traitement ultérieur,
**caractérisé en ce que** la courroie de film plastique (12) comporte une pluralité de poches (52) formées dans celle-ci.

2. Dispositif selon la revendication 1, dans lequel la courroie de film plastique (12) provient d'une bobine de film plastique (14).

3. Dispositif selon la revendication 1 ou 2, dans lequel l'entrée (17; 117; 217'), la chambre de congélation (21; 121; 221) et la sortie (19; 119; 219) sont dimensionnées et configurées de façon à recevoir une partie de la courroie de film plastique (12).

4. Dispositif selon l'une quelconque des revendications 1 à 3, **caractérisé en ce que** chacune de ladite pluralité de poches (52) est dimensionnée et configurée de façon à recevoir un d'une pluralité de produits (16) et la substance cryogénique à l'intérieur de la poche (52).

5. Dispositif selon l'une quelconque des revendications 1 à 4, dans lequel la substance cryogénique est sélectionnée parmi l'azote liquide et le dioxyde de carbone liquide.

6. Dispositif selon l'une quelconque des revendications 1 à 5, dans lequel le produit (16) est un produit alimentaire.

7. Procédé pour transporter un produit (16) à refroidir ou à congeler, comprenant les étapes suivantes:
- fournir une courroie de film plastique (12) de matière flexible;
- former une pluralité de poches (52) dans la courroie de film plastique (12), chacune de la pluralité de poches (52) étant dimensionnée et configurée de façon à recevoir un ou une pluralité des produits (16) dans celle-ci pour le refroidissement ou la congélation; et
- fournir une substance cryogénique à la pluralité de poches (52) pour mettre en contact la substance cryogénique avec la pluralité de produits (16) à-refroidir ou à congeler.

8. Procédé selon la revendication 7, dans lequel la fourniture de la substance cryogénique comprend la pulvérisation de la substance cryogénique sur le produit (16) dans la pluralité de poches (52).

9. Procédé selon la revendication 7 ou 8, dans lequel la fourniture de la substance cryogénique comprend l'immersion de la courroie de film plastique (12) dans un bain de la substance cryogénique.

10. Procédé selon l'une quelconque des revendications 7 à 9, dans lequel la substance cryogénique est sélectionnée parmi l'azote liquide et le dioxyde de carbone liquide.

11. Procédé selon l'une quelconque des revendications 7 à 10, comprenant en outre l'étape de fusion et de recyclage de la courroie de film plastique (12) pour un usage ultérieur.

12. Procédé selon l'une quelconque des revendications 7 à 11, dans lequel le produit (16) est un produit alimentaire.

13. Procédé pour refroidir ou congeler un produit (16) disposé dans l'une quelconque d'une pluralité de poches (52) formées dans une courroie de film plastique (12), comprenant le transport de la courroie de film plastique (12) à travers un congélateur (18; 118; 218) pour exposer la pluralité de poches (52) à une substance cryogénique distribuée dans le congélateur (18; 118; 218), et l'extraction des produits congelés (16) hors de la pluralité de poches (52) de la courroie de film plastique (12).

14. Utilisation d'un dispositif (10; 110; 210) selon l'une quelconque des revendications 1 à 6, en particulier d'une courroie de film plastique (12) comportant une pluralité de poches (52) formées dans celle-ci, pour refroidir ou congeler un produit (16) en particulier disposé dans l'une quelconque de la pluralité de poches (52).
